# EUROPEAN PATENT SPECIFICATION

(11) **EP 2 100 236 B1**
(45) Date of publication and mention of the grant of the patent: **25.05.2016**
(21) Application number: 06831619.9
(22) Date of filing: 30.11.2006
(51) Int. Cl.: G06F 17/30, G06Q 10/00, H04L 12/58, H04L 29/08

(54) **METHOD, APPARATUS AND COMPUTER PROGRAM PRODUCT FOR PROVIDING INTELLIGENT SYNCHRONIZATION**
VERFAHREN, VORRICHTUNG UND COMPUTERPROGRAMMPRODUKT ZUR BEREITSTELLUNG EINER INTELLIGENTEN SYNCHRONISATION
PROCÉDÉ, APPAREIL ET PROGRAMME INFORMATIQUE POUR FOURNIR UNE SYNCHRONISATION INTELLIGENTE

(43) Date of publication of application: 16.09.2009
(73) Proprietor: Intellisync Corporation, San Jose, CA 95131 (US)
(72) Inventor: PETERSON, Kevin, Canton, GA 30115 (US); HENRY, Keith, Alpharetta, GA 30005 (US); BARTLETT, Troy, Roswell, GA 30076 (US); BREDENBERG, Jay, Atlanta, GA 30342 (US); DECKER, David, Atlanta, GA 30306 (US)
(74) Representative: Tampereen Patenttitoimisto Oy
(86) International application number: PCT/IB2006/003433
(87) International publication number: WO 2008/065469

(56) References cited:
- WO-A-03/083667
- US-A1- 2003 055 825
- OPEN MOBILE ALLIANCE: "DS Protocol Approved Version 1.2 OMA-TS-DS_Protocol-V1_2-20060710-A"[Online ] 10 July 2006 (2006-07-10), pages 1-90, XP002456758 Retrieved from the Internet: URL:http://www.openmobilealliance.org/rele ase_program/docs/DS/V1_2-20060710-A/OMA-TS -DS_Protocol-V1_2-20060710-A.pdf> [retrieved on 2007-10-26]
- IANYWHERE, SYBASE COMPANY: "Whitepaper: Synchronizing and Managing Mobile Devices"[Online] March 2006 (2006-03), pages 0-8, XP002456759 Retrieved from the Internet: URL:http://www.ianywhere.com/whitepapers/i ndex.html> [retrieved on 2007-10-26]

## Description

### TECHNOLOGICAL FIELD

Embodiments of the present invention relate generally to data synchronization technology and, more particularly, relate to a method, apparatus, and computer program product for providing intelligent synchronization between devices.

### BACKGROUND

The modem communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. One area in which there is a demand to increase ease of information transfer relates to the delivery of services to a user of a mobile terminal. The services may be in the form of a particular media or communication application desired by the user, such as a music player, a game player, an electronic book, short messages, email, etc. The services may also be in the form of interactive applications in which the user may communicate with a network device in order to perform a task or achieve a goal. The services may be provided from a network server or other network device, or even from the mobile terminal such as, for example, a mobile telephone, a mobile television, a mobile gaming system, a mobile computer, etc.

US2003055825A is an example of published prior art, in which is described a system and method for resolving a conflict detected while synchronizing a first data object in a first store associated with a mobile device and a second data object in a second store associated with a server. The method comprises designating at least one property of the first data object as a mergeable property and at least one corresponding property of the second data object as a corresponding mergeable property, determining if the conflict detected comprises a difference between the at least one mergeable property of the first data object and the at least one corresponding mergeable property of the second data object, and if so, merging the first data object and the second data object to resolve the conflict.

### BRIEF SUMMARY

For many services in which provision of the service involves a two way communication of data between devices, data synchronization between the devices may be desirable at periodic intervals. For example, in the case of email services, an email server may synchronize periodically with a remote device such as a laptop computer or a mobile terminal directly or by providing data for synchronization to a synchronization server. In some cases, a wired or wireless communication network may be utilized to initiate a communication session between the synchronization server and the remote device during which data synchronization may be accomplished, for example, at either regular intervals or in response to receipt of new data. During the data synchronization, the synchronization server may communicate changes such as new email messages to the remote device and the remote device may communicate to the synchronization server any changes such as read emails or newly drafted emails ready for transmission to a recipient. Alternatively, the remote device may have changes to communicate to the email server or the remote device and the email server may exchange changes via the synchronization server.

Conventional synchronization procedures often require the exchange of relatively large quantities of data via a relatively high number of round trips of communication signals. Accordingly, battery consumption and processing power may be rapidly and disadvantageously consumed. In order to reduce the disadvantages of conventional methods, efforts have been made to reduce the amount of data and the number of round trips of communication signals that are exchanged during data synchronization. However, such mechanisms may not be performed in a discriminatory fashion, nor may they be capable of initiation at the remote device, which may be desirable in certain instances.

Accordingly, it may be desirable to provide a mechanism by which data synchronization may be performed in an intelligent way in order to avoid encountering the disadvantages described above. Thus, users of mobile terminals and other electronic devices may further customize synchronization of their equipment thereby enhancing the user's experience in using their equipment.

A method, apparatus and computer program product are therefore provided for providing intelligent synchronization between devices. The invention is defined in the independent claims 1 and 8-11.

According to exemplary embodiments of the present invention, in response to receipt of a message attempting to synchronize with a network element (e.g., a server), a client device may first determine whether the client device has any changes (e.g., new data which has not yet been sent to the server) independent of the message received. In one exemplary embodiment, if the client device has no changes, a first synchronization method such as a fast push synchronization may be performed. However, if the client device has changes, the client device may decline synchronization and subsequently initiate a second synchronization method.

In one exemplary embodiment, a method of providing intelligent synchronization is provided. The method comprises receiving a message. The message may indicate that data for synchronization is available. The method may also comprise selecting, in response to receipt of the message, a synchronization method from a plurality of synchronization methods based at least in part on whether the client device comprises new data that has not been communicated to a network element.

In another exemplary embodiment, a computer program product for providing intelligent synchronization is provided. The computer program product comprises at least one computer-readable storage medium having computer-readable program code portions stored therein. The computer-readable program code portions comprise first and second executable portions. The first executable portion is for receiving a message. The message may indicate that data for synchronization is available. The second executable portion is for selecting, in response to receipt of the message, a synchronization method from a plurality of synchronization methods based at least in part on whether the client device includes new data that has not been communicated to a network element.

In another exemplary embodiment, an apparatus for providing intelligent synchronization is provided. The apparatus comprises a processing element configured to receive a message. The message may indicate that data for synchronization is available. The processing element may also be configured to select, in response to receipt of the message, a synchronization method from a plurality of synchronization methods based at least in part on whether the apparatus includes new data that has not been communicated to a network element.

In another exemplary embodiment, an apparatus for providing intelligent synchronization is provided. The apparatus comprises means for receiving a message. The message may indicate that data for synchronization is available. The apparatus may further comprise means for selecting, in response to receipt of the message, a synchronization method from a plurality of synchronization methods based at least in part on whether the client device includes new data that has not been communicated to a network element.

In another exemplary embodiment, an apparatus for providing intelligent synchronization is provided. The apparatus comprises a processing element configured to receive an indication of a presence of data for synchronization intended for a client device, to communicate a message indicating that the data for synchronization is available to the client device, and to receive one of only an acknowledgement from the client device in response to the client device having no new data or a synchronization request from the client device in response to the client device having new data.

Embodiments of the invention may provide a method, apparatus and computer program product for employment in systems where synchronization of data between a client device and a server is desired. As a result, for example, mobile terminals and other electronic devices may benefit from an ability to determine a synchronization method to be utilized in data synchronization based on a state of the mobile terminal with respect to new data at the mobile terminal of which the network element (e.g., the server) is not yet aware.

### BRIEF DESCRIPTION OF THE DRAWING(S)

Having thus described embodiments of the invention in general terms, reference will now be made to the accompanying drawings, which are not necessarily drawn to scale, and wherein:
FIG. 1 is a schematic block diagram of a mobile terminal according to an exemplary embodiment of the present invention;
FIG. 2 is a schematic block diagram of a wireless communications system according to an exemplary embodiment of the present invention;
FIG. 3 illustrates a block diagram of a system for providing intelligent synchronization according to an exemplary embodiment of the present invention;
FIG. 4 illustrates a block diagram of another system for providing intelligent synchronization according to an exemplary embodiment of the present invention;
FIG. 5A illustrates a block diagram of a client synchronization element according to an exemplary embodiment of the present invention;
FIG. 5B illustrates a block diagram of a synchronization element according to an exemplary embodiment of the present invention;
FIG. 6 is a control flow diagram illustrating a first synchronization method in accordance with exemplary embodiments of the present invention;
FIG. 7 is a control flow diagram illustrating a second synchronization method in accordance with exemplary embodiments of the present invention;
FIG. 8 is a flow diagram according to an exemplary method for providing intelligent synchronization according to an exemplary embodiment of the present invention; and
FIG. 9 is a flow diagram according to another exemplary method for providing intelligent synchronization according to an exemplary embodiment of the present invention.

### DETAILED DESCRIPTION

Embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

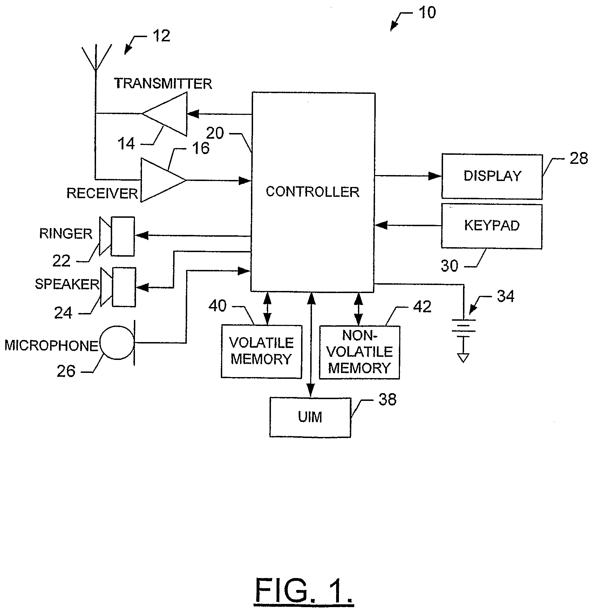

FIG. 1 is a schematic block diagram of a mobile terminal 10, for example a mobile telephone, according to an exemplary embodiment of the present invention. It should be understood, however, that the mobile telephone as illustrated and hereinafter described is merely illustrative of one type of mobile terminal that would benefit from embodiments of the present invention and, therefore, should not be taken to limit the scope of embodiments of the present invention. While one embodiment of the mobile terminal 10 is illustrated and will be hereinafter described for purposes of example, other types of mobile terminals, such as portable digital assistants (PDAs), pagers, mobile computers, mobile televisions, gaming devices, laptop computers, cameras, video recorders, GPS devices and other types of voice and text communications systems, can readily employ embodiments of the present invention. Furthermore, devices that are not mobile may also readily employ embodiments of the present invention.

The system and method of embodiments of the present invention will be primarily described below in conjunction with mobile communications applications. However, it should be understood that the system and method of embodiments of the present invention can be utilized in conjunction with a variety of other applications, both in the mobile communications industries and outside of the mobile communications industries.

The mobile terminal 10 comprises an antenna 12 (or multiple antennae) in operable communication with a transmitter 14 and a receiver 16. The mobile terminal 10 further comprises a controller 20 or other processing element that provides signals to and receives signals from the transmitter 14 and receiver 16, respectively. The signals comprise signaling information in accordance with the air interface standard of the applicable cellular system, and also user speech, received data, and/or user generated data. In this regard, the mobile terminal 10 is capable of operating with one or more air interface standards, communication protocols, modulation types, and access types. By way of illustration, the mobile terminal 10 is capable of operating in accordance with any of a number of first, second, third and/or fourth-generation communication protocols or the like. For example, the mobile terminal 10 may be capable of operating in accordance with second-generation (2G) wireless communication protocols IS-136 (TDMA), GSM, and IS-95 (CDMA), with third-generation (3G) wireless communication protocols, such as UMTS, CDMA2000, WCDMA and TD-SCDMA, with fourth-generation (4G) wireless communication protocols and/or the like.

It is understood that the controller 20 comprises circuitry desirable for implementing functions of the mobile terminal 10. For example, the controller 20 may comprise a digital signal processor device, a microprocessor device, various analog to digital converters, digital to analog converters, and/or other support circuits. Control and signal processing functions of the mobile terminal 10 are allocated between these devices according to their respective capabilities. The controller 20 thus may also comprise the functionality to convolutionally encode and interleave message and data prior to modulation and transmission. The controller 20 can additionally comprise an internal voice coder, and may comprise an internal data modem. Further, the controller 20 may comprise functionality to operate one or more software programs, which may be stored in memory. For example, the controller 20 may be capable of operating a connectivity program, such as a conventional Web browser. The connectivity program may then allow the mobile terminal 10 to transmit and receive Web content, for example location-based content and/or other web page content, according to a Wireless Application Protocol (WAP), Hypertext Transfer Protocol (HTTP) or the like, for example.

The mobile terminal 10 may also comprise a user interface comprising an output device such as a conventional earphone or speaker 24, a ringer 22, a microphone 26, a display 28, and a user input interface, which are coupled to the controller 20. The user input interface, which allows the mobile terminal 10 to receive data, may comprise any of a number of devices allowing the mobile terminal 10 to receive data, such as a keypad 30, a touch display (not shown) or other input device. In embodiments comprising the keypad 30, the keypad 30 may comprise the conventional numeric (0-9) and related keys (#, *), and other keys used for operating the mobile terminal 10. Alternatively, the keypad 30 may comprise a conventional QWERTY keypad arrangement. The keypad 30 may also comprise various soft keys with associated functions. In addition, or alternatively, the mobile terminal 10 may comprise an interface device such as a joystick or other user input interface. The mobile terminal 10 further comprises a battery 34, such as a vibrating battery pack, for powering various circuits that are required to operate the mobile terminal 10, as well as optionally providing mechanical vibration as a detectable output.

The mobile terminal 10 may further comprise a user identity module (UIM) 38. The UIM 38 is typically a memory device having a processor built in. The UIM 38 may comprise, for example, a subscriber identity module (SIM), a universal integrated circuit card (UICC), a universal subscriber identity module (USIM), a removable user identity module (R-UIM), etc. The UIM 38 typically stores information elements related to a mobile subscriber. In addition to the UIM 38, the mobile terminal 10 may be equipped with memory. For example, the mobile terminal 10 may comprise volatile memory 40, such as volatile Random Access Memory (RAM) comprising a cache area for the temporary storage of data. The mobile terminal 10 may also comprise other non-volatile memory 42, which can be embedded and/or may be removable. The non-volatile memory 42 can additionally or alternatively comprise an EEPROM, flash memory or the like, such as that available from the SanDisk Corporation of Sunnyvale, California, or Lexar Media Inc. of Fremont, California. The memories can store any of a number of pieces of information, and data, used by the mobile terminal 10 to implement the functions of the mobile terminal 10. For example, the memories can comprise an identifier, such as an international mobile equipment identification (IMEI) code, capable of uniquely identifying the mobile terminal 10.

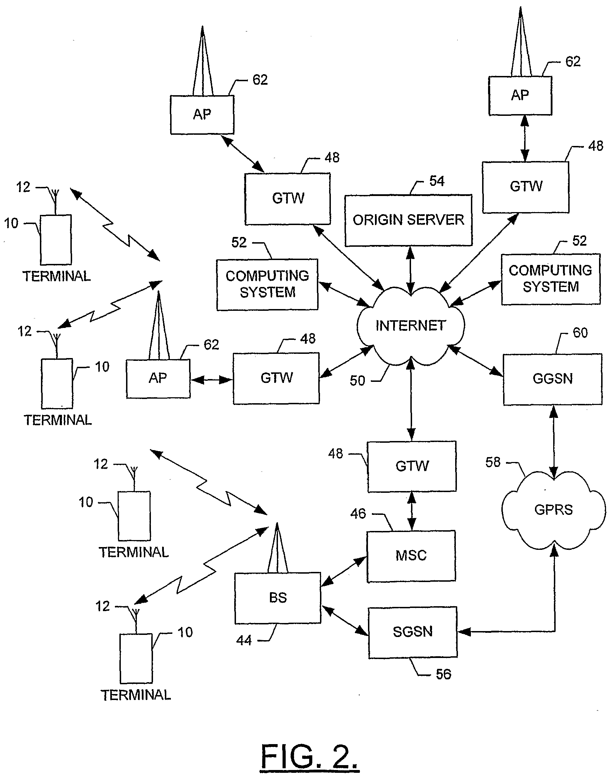

FIG. 2 is a schematic block diagram of a wireless communications system according to an exemplary embodiment of the present invention. Referring now to FIG. 2, an illustration of one type of system that would benefit from embodiments of the present invention is provided. As shown, one or more mobile terminals 10 may each comprise an antenna 12 (or multiple antennae) for transmitting signals to and for receiving signals from a base site or base station (BS) 44. The base station 44 may be part of one or more cellular or mobile networks each of which comprises elements required to operate the network, such as a mobile switching center (MSC) 46. In operation, the MSC 46 is capable of routing calls to and from the mobile terminal 10 when the mobile terminal 10 is making and receiving calls. The MSC 46 may also provide a connection to landline trunks when the mobile terminal 10 is involved in a call. In addition, the MSC 46 may be capable of controlling the forwarding of messages to and from the mobile terminal 10, and may also control the forwarding of messages for the mobile terminal 10 to and from a messaging center. It should be noted that although the MSC 46 is shown in the system of FIG. 2, the MSC 46 is merely an exemplary network device and embodiments of the present invention are not limited to use in a network employing an MSC.

The MSC 46 can be coupled to a data network, such as a local area network (LAN), a metropolitan area network (MAN), and/or a wide area network (WAN). The MSC 46 can be directly coupled to the data network. In one embodiment, however, the MSC 46 is coupled to a gateway device (GTW) 48, and the GTW 48 is coupled to a WAN, such as the Internet 50. In turn, devices such as processing elements (e.g., personal computers, server computers or the like) can be coupled to the mobile terminal 10 via the Internet 50. For example, as explained below, the processing elements can comprise one or more processing elements associated with a computing system 52 (two shown in FIG. 2), origin server 54 (one shown in FIG. 2) or the like, as described below.

The BS 44 can also be coupled to a signaling GPRS (General Packet Radio Service) support node (SGSN) 56. As known to those skilled in the art, the SGSN 56 is typically capable of performing functions similar to the MSC 46 for packet switched services. The SGSN 56, like the MSC 46, can be coupled to a data network, such as the Internet 50. The SGSN 56 can be directly coupled to the data network. In a more typical embodiment, however, the SGSN 56 is coupled to a packet-switched core network, such as a GPRS core network 58. The packet-switched core network is then coupled to another GTW 48, such as a GTW GPRS support node (GGSN) 60, and the GGSN 60 is coupled to the Internet 50. In addition to the GGSN 60, the packet-switched core network can also be coupled to a GTW 48. Also, the GGSN 60 can be coupled to a messaging center. In this regard, the GGSN 60 and the SGSN 56, like the MSC 46, may be capable of controlling the forwarding of messages, such as MMS messages. The GGSN 60 and SGSN 56 may also be capable of controlling the forwarding of messages for the mobile terminal 10 to and from the messaging center.

In addition, by coupling the SGSN 56 to the GPRS core network 58 and the GGSN 60, devices such as a computing system 52 and/or origin server 54 may be coupled to the mobile terminal 10 via the Internet 50, SGSN 56 and GGSN 60. In this regard, devices such as the computing system 52 and/or origin server 54 may communicate with the mobile terminal 10 across the SGSN 56, GPRS core network 58 and the GGSN 60. By directly or indirectly connecting mobile terminals 10 and the other devices (e.g., computing system 52, origin server 54, etc.) to the Internet 50, the mobile terminals 10 may communicate with the other devices and with one another, such as according to the Hypertext Transfer Protocol (HTTP) and/or the like, to thereby carry out various functions of the mobile terminals 10.

Although not every element of every possible mobile network is shown and described herein, it should be appreciated that the mobile terminal 10 may be coupled to one or more of any of a number of different networks through the BS 44. In this regard, the network(s) may be capable of supporting communication in accordance with any one or more of a number of first-generation (1G), second-generation (2G), 2.5G, 2.75G, third-generation (3G), 3.9G, fourth-generation (4G) mobile communication protocols and/or the like. For example, one or more of the network(s) can be capable of supporting communication in accordance with 2G wireless communication protocols IS-136 (TDMA), GSM, and IS-95 (CDMA). Also, for example, one or more of the network(s) can be capable of supporting communication in accordance with 2.5G wireless communication protocols GPRS, Enhanced Data GSM Environment (EDGE), or the like. Further, for example, one or more of the network(s) can be capable of supporting communication in accordance with 3G wireless communication protocols such as a Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones).

The mobile terminal 10 can further be coupled to one or more wireless access points (APs) 62. The APs 62 may comprise access points configured to communicate with the mobile terminal 10 in accordance with techniques such as, for example, radio frequency (RF), Bluetooth (BT), infrared (IrDA) or any of a number of different wireless networking techniques, comprising wireless LAN (WLAN) techniques such as IEEE 802.11 (e.g., 802.11a, 802.11b, 802.11g, 802.11n, etc.), WiMAX techniques such as IEEE 802.16, ultra wideband (UWB) techniques such as IEEE 802.15 and/or the like. The APs 62 may be coupled to the Internet 50. Like with the MSC 46, the APs 62 can be directly coupled to the Internet 50. In one embodiment, however, the APs 62 are indirectly coupled to the Internet 50 via a GTW 48. Furthermore, in one embodiment, the BS 44 may be considered as another AP 62. As will be appreciated, by directly or indirectly connecting the mobile terminals 10 and the computing system 52, the origin server 54, and/or any of a number of other devices, to the Internet 50, the mobile terminals 10 can communicate with one another, the computing system, etc., to thereby carry out various functions of the mobile terminals 10, such as to transmit data, content or the like to, and/or receive content, data or the like from, the computing system 52. As used herein, the terms "data," "content," "information" and similar terms may be used interchangeably to refer to data capable of being transmitted, received and/or stored. Thus, use of any such terms should not be taken to limit the spirit and scope of embodiments of the present invention.

Although not shown in FIG. 2, in addition to or in lieu of coupling the mobile terminal 10 to computing systems 52 across the Internet 50, the mobile terminal 10 and computing system 52 may be coupled to one another and communicate in accordance with, for example, RF, BT, IrDA or any of a number of different wireline or wireless communication techniques, comprising LAN, WLAN, WiMAX, UWB techniques and/or the like. One or more of the computing systems 52 can additionally, or alternatively, comprise a removable memory capable of storing content, which can thereafter be transferred to the mobile terminal 10. Further, the mobile terminal 10 can be coupled to one or more electronic devices, such as printers, digital projectors and/or other multimedia capturing, producing and/or storing devices (e.g., other terminals). Like with the computing systems 52, the mobile terminal 10 may be configured to communicate with the portable electronic devices in accordance with techniques such as, for example, RF, BT, IrDA or any of a number of different wireline or wireless communication techniques, comprising USB, LAN, WLAN, WiMAX, UWB techniques and/or the like.

In an exemplary embodiment, data may be communicated over the system of FIG. 2 between a client device such as a mobile terminal, which may be similar to the mobile terminal 10 of FIG. 1 and a server of the system of FIG. 2, or between any client device in communication with a server or network device. As such, it should be understood that the system of FIG. 2 need not be employed for communication between the server and the client device, but rather FIG. 2 is merely provided for purposes of example. Any wired or wireless connection between a client device and a server is contemplated.

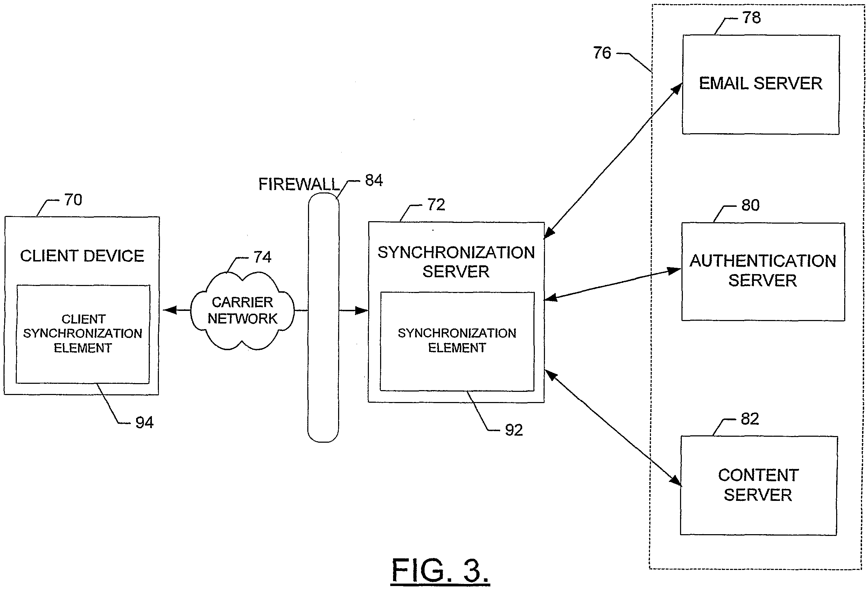

FIG. 3 illustrates a block diagram of a system for providing intelligent synchronization according to an exemplary embodiment of the present invention. The system of FIG. 3 will be described, for purposes of example, in connection with the mobile terminal 10 of FIG. 1. However, it should be noted that the system of FIG. 3, may also be employed in connection with a variety of other devices, both mobile and fixed, and therefore, embodiments of the present invention should not be limited to application on devices such as the mobile terminal 10 of FIG. 1. It should also be noted, that while FIG. 3 illustrates one example of a configuration of a system for providing intelligent synchronization, numerous other configurations may also be used to implement embodiments of the present invention.

Referring now to FIG. 3, the system comprises a client device 70 in communication with a synchronization server 72 via a carrier network 74. The carrier network 74 may be similar to a network of the system described in connection with FIG. 2. As shown in FIG. 3, the synchronization server 72 may be in communication with one or more devices of a local network 76, which may be, for example, a corporate network. The local network 76 may comprise an email server 78, an authentication server 80 and one or more content servers 82. The content servers 82 could comprise, for example, an exchange server, a domino server, an Internet Message Access Protocol (IMAP) server, etc. In an exemplary embodiment, a firewall 84 may be disposed in the communication chain between the synchronization server 72 and the carrier network 74. Additionally, wired or wireless communication may be established between the elements of FIG. 3 and such communication may or may not employ encryption mechanisms.

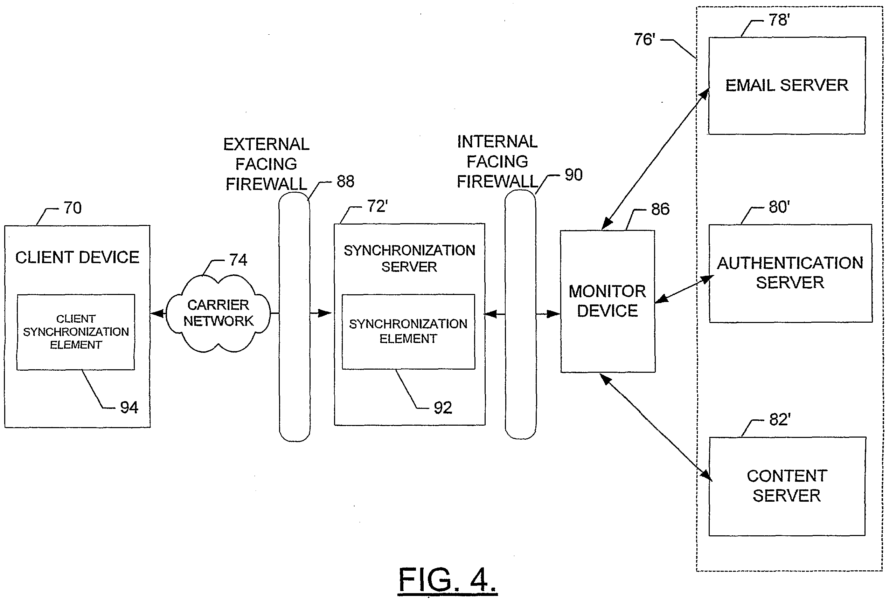

It should also be noted that the communication between the synchronization server 72 and the local network 76 may be either direct or indirect. In this regard, FIG. 4 shows an alternative arrangement in which a synchronization server 72' is in indirect communication with a local network 76'. As such, FIG. 4 illustrates a block diagram of another system for providing intelligent synchronization according to an exemplary embodiment of the present invention. For example, as shown in FIG. 4, devices of the local network 76' may be in communication with a monitor device 86. The devices of the local network 76' may include an email server 78', an authentication server 80' and one or more content servers 82', each of which may be similar to corresponding ones of the email server 78, the authentication server 80 and the content servers 82 of FIG. 3, except that they are configured to communicate with the monitoring device 86 instead of communicating directly with the synchronization server 72'. The monitor device 86 may be configured to monitor the devices of the local network 76' for the presence of new information relative to the client device 70. For example, the monitor device 86 may monitor the email server 78' for incoming email messages that are intended for delivery to the client device 70. In response to detection of the new information (i.e., data for synchronization), the monitor device 86 may request or otherwise initiate communication of the new information to the client device 70 via the synchronization server 72'. The system of FIG. 4 may also replace the firewall 84 of FIG. 3 with an external facing firewall 88 and add an additional internal facing firewall 90 disposed in the communication path between the synchronization server 72' and the monitor device 86. As such, it may be understood that the embodiment of FIG. 3 corresponds to a scenario in which the synchronization server 72 is specifically associated with the local network 76, whereas the embodiment of FIG. 4 may illustrate a scenario in which the synchronization server 72' may be associated with the local network 76' either alone or in combination with other local networks. As such, the synchronization server 72' of FIG. 4 may be operated by a third party.

The synchronization server 72' may be substantially similar to the synchronization server 72 of FIG. 3 except that the synchronization server 72' may be configured to communicate with the monitor device 86 instead of communicating directly with devices of the local network 76'. Accordingly, operation of an embodiment of the present invention will now be further described with reference to the synchronization server 72 of FIG. 3. However, it should be understood that the synchronization server 72' of FIG. 4 may operate in a substantially similar fashion to the synchronization server 72. The synchronization server 72 (and the synchronization server 72') may comprise a synchronization element 92 according to an embodiment of the present invention. In this regard, the synchronization element 92 may be any device or means embodied in either hardware, software, or a combination of hardware and software capable of providing synchronization between the client device 70 and a server or device of the local network 76 via one of at least a first synchronization method and a second synchronization method during a data session which, in one exemplary embodiment, may be initiated only by the client device 70. In other words, the synchronization element 92 is configured to manage communication of data between the client device 70 and servers or devices of the local network 76 for the purposes of data synchronization during a user (e.g., a user of the client device 70) initiated data session. In an exemplary embodiment, the synchronization element 92 may be embodied as an executable application configured to provide at least conventional synchronization and so called "fast push" synchronization, which will be described in greater detail below. As such, the synchronization element 92, in the form of an executable application, may operate under the control of a processing element of the synchronization server 72. The processing element may execute instructions associated with the executable application which are stored at a memory of the synchronization server 72 or otherwise accessible to the processing element of the synchronization server 72.

The client device 70 may be the mobile terminal 10 of FIG. 1 or any other client device having at least a processing element capable of executing instructions in accordance with embodiments of the present invention. In an exemplary embodiment, the client device 70 may comprise a client synchronization element 94. In this regard, the client synchronization element 94 may be any device or means embodied in either hardware, software, or a combination of hardware and software capable of operation in accordance with embodiments of the present invention as described in greater detail below. The client synchronization element 94 may be configured to select, in response to receipt of a message, one of a plurality of synchronization methods, for example at least a first synchronization method or a second synchronization method, based on whether the client device comprises new data for communication, for example, via the synchronization element 92 independent of the receipt of the message. In an exemplary embodiment, the message may be received from the synchronization element 92 of the synchronization server 72. If desired, the message could also be received from any other device, for example email servers 78 and 78'. In other words, in an exemplary embodiment, the client synchronization element 94 may be configured to make a determination as to how (and possibly also when) to conduct a synchronization with the synchronization server 72, in consideration of whether or not the client device 70 has changes (e.g., new data) to communicate, for example, to a device or server of the local network 76 via the synchronization server 72. As another alternative, synchronization may be performed, for example, with the email server 78 or another device of the local network 76.

Throughout this application there may appear descriptions of communication between the client device 70 and the synchronization server 72. However, it should be understood that such communication may be actually conducted between the synchronization element 92 and the client synchronization element 94 with respect to communications related to synchronization whether or not the synchronization element 92 and the client synchronization element 94 are specifically recited. Additionally, it should be understood that communication between the synchronization element 92 and the client synchronization element 94 occurs via the carrier network 74 even though the carrier network 74 may not be specifically mentioned in this regard.

In an exemplary embodiment, the client synchronization element 94 may be embodied as an executable application configured to select a synchronization method based on whether the client device 70 has changes to communicate to the synchronization server 72 as will be described in greater detail below. As such, the client synchronization element 94, in the form of an executable application, may operate under the control of a processing element of the client device 70 (e.g., the controller 20 of FIG. 1) which may execute instructions associated with the executable application which are stored at a memory of the client device 70 or otherwise accessible to the processing element of the client device 70. The processing elements as described herein may be embodied in many ways. For example, the processing elements may be embodied as a processor, a coprocessor, a controller or various other processing means or devices including integrated circuits such as, for example, an ASIC (application specific integrated circuit).

In an exemplary embodiment, communication between the client device 70 and the synchronization server 72 may be initiated by the client device 70, for example, as a synchronization session. In this regard, the client device 70 may either manually (e.g., by deliberate user action such as pressing a key or selecting an icon) or automatically (e.g., in response to a notification of new data received or at a predefined or scheduled time) initiate the synchronization session. Initiation of the synchronization session may comprise a login of the client device 70 at or to the synchronization server 72. As such, the initiation may comprise the communication of a security negotiation packet. The security negotiation packet may comprise, for example, a username and password associated with the user, a device ID, an expected encryption method, and/or a public key corresponding to the expected encryption method. In response to receipt of the security negotiation packet, the synchronization server 72 may establish a connection with the client device 70.

After establishing the connection, the client device 70 may communicate further information to the synchronization server 72 in order to authenticate a communication channel between the client device 70 and the synchronization server 72. The further information may comprise, for example, an identification tag for identifying the client device 70 and authentication information. The authentication information may comprise a device password (which may be provided to the client device 70 by the synchronization server 72), a connection sequence number, and a random nonce. The device password may be utilized to uniquely identify the client device 70 to the synchronization server 72, while the connection sequence number may be utilized to prevent replay attacks. The random nonce may be a value which is randomly generated with each communication such that if a subsequent communication includes a previously used random nonce, the subsequent communication can be identified as a replay attack. In response to the device password matching an expected device password at the synchronization server 72, the communication channel may be authenticated and, for example, the synchronization server 72 may store a record of the socket or port of the communication channel associated with the client device 70. Accordingly, when the synchronization server 72 receives an indication from either the monitor device 86 or a particular device or server of the local network 76 indicating the presence of data for synchronization with the client device 70, the synchronization server 72 may look up the socket or port associated with the client device 70 and send the message indicating that data for synchronization is available. If desired, in an exemplary embodiment, the message could request a synchronization with the client device 70. In yet another embodiment, the message could identify a type of synchronization (e.g., specifying a first synchronization method or a second synchronization method) that is requested. Additionally or alternatively, the message could comprise the data or at least a portion of the data for synchronization. The message could also be referred to as a push message or a push notification.

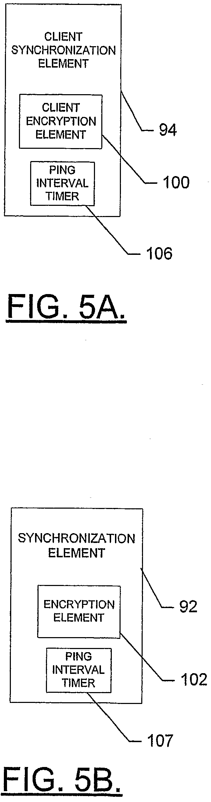

In an exemplary embodiment, communication between the client device 70 and the synchronization server 72 may be protected by security measures and/or may incorporate timing monitoring, for example, to prevent a firewall timeout. In this regard, FIG. 5A illustrates a block diagram of the client synchronization element 94 according to an exemplary embodiment of the present invention. FIG. 5B illustrates a block diagram of the synchronization element 92 according to an exemplary embodiment of the present invention. As shown in FIG. 5A, the client synchronization element 94 may comprise a client encryption element 100 configured to provide encryption services related to communications between the client device 70 and the synchronization server 72, and a ping interval timer 106. As shown in FIG. 5B, the synchronization element 92 may comprise an encryption element 102 configured to provide encryption services related to communications between the synchronization server 72 and the client device 70, and a ping interval timer 107.

In an exemplary embodiment, an RSA algorithm may be employed to provide an RSA public key for use in encrypting signals communicated between the client device 70 and the synchronization server 72. The synchronization server 72 may employ a corresponding RSA private key for decoding communications received from the client device 70. Similarly, the client device 70 may employ the RSA public key for decoding communications received from the synchronization server 72 which have been encrypted with the RSA private key. As such, the client encryption element 100 may store or otherwise access the RSA public key and the encryption element 102 may store or otherwise access the RSA private key. The RSA public key may have initially been stored at the client device 70 during loading of an application corresponding to the client synchronization element 94, which may have been a uniquely generated key provided by the synchronization element 92 of the synchronization server 72 to correspond to the RSA private key held by the synchronization server 72 in response to the loading of the application at the client device 70.

In an exemplary embodiment, in response to establishment of the communication channel between the client device 70 and the synchronization server 72, the synchronization element 92 may send a ping message to the client device 70. The ping message may inform the client device 70 of the ping interval at which the synchronization server 72 will issue further ping messages to verify continuity of the communication channel. In this regard, the ping interval timer 106 of the client device 70 and the ping interval timer 107 of the synchronization server 72 may each reset in response to receipt of either ping messages or communications received at either the client device 70 or the synchronization server 72. Thus, for example, if the ping interval timer 106 times out (such as may occur if the communication channel has been lost for any reason), the client device 70 may be informed that the connection is lost so that the connection may be reestablished. Additionally or alternatively, if the ping interval timer 107 times out, the synchronization server 72 may drop the socket connection previously associated with the client device 70 (e.g., in response to a socket error). In an exemplary embodiment, the ping interval may be defined at a rate to satisfy the firewalls in order to prevent a firewall timeout.

In an exemplary embodiment, at least a portion of synchronization server 72 (e.g., the synchronization element 92) may be configured to send a particular type of message to the client device 70 in response to receipt of the indication of the presence of new data for synchronization with the client device 70. For example, the synchronization element 92 may produce a first message (e.g., a first type of message) associated with the first synchronization method, or a second message (e.g., a second type of message) associated with the second synchronization method. However, it should be noted that additional types of messages and synchronization methods may also be employed. The client synchronization element 94 may be configured to interpret each of the first message, the second message and/or any additional messages, as being associated with a corresponding (generally different) synchronization method as described in greater detail below. As such, in response to receipt of the first message, the client synchronization element 94 may determine whether there is new data at the client device 70 (independent of the first message and contents associated with the first message) that has not been sent to the synchronization server 72. If new data is detected, the client device 70 may ignore the message or otherwise decline to synchronize. However, the client device 70, dependent upon user defined settings, may immediately initiate a request to synchronize by the second synchronization method or may initiate a request to synchronize by the second synchronization method at a later time either manually or based on a predetermined schedule. If instead there is no new data detected at the client device 70, the client device 70 (e.g., the client synchronization element 94) may process the first message, which in an exemplary embodiment may comprise the data for synchronization, thereby synchronizing with the synchronization server 72. In an exemplary embodiment, the synchronization server 72 may be configured to select whether to send the first or second message based upon device capabilities associated with the client device 70. The capabilities of the client device 70 may be determined, for example, during previous communications with the client device 70, by or based on network information related to the client device 70 stored at the synchronization server 72 or otherwise accessible to the synchronization server 72.

As stated above, instead of receiving the first message, the client device 70 may receive the second message from the synchronization server 72. As such, in response to receipt of the second message, the client synchronization element 94 may be configured to decline to synchronize and initiate a request to synchronize by the second synchronization method either immediately or at a later time. In an exemplary embodiment, the client synchronization element 94 may be configured to prompt a user to initiate or decline to initiate synchronization via a selected synchronization method in response to receipt of a message such as the second message.

It should be noted that, in an exemplary embodiment, the term "new" data, should be understood to refer to data that is "new" relative to the synchronization server 72. As such, in this context, the term new in no way implies that the data is recently created at the client device 70. Rather, data may be resident for any length of time on the client device 70 prior to communication of the data to the synchronization server 72 and such data may still be considered new data as used herein. Additionally, it should be understood that the new data may be reflective of changes in existing data at the client device 70 since the last synchronization. In this regard, the new data or changes in existing data should be understood to occur prior to receipt of the first message, thereby making such changes or new data independent of the first message and contents associated with the first message.

As briefly described above, the client device 70 may be configured to receive user input defining when and/or how to initiate synchronization after declining to process the message (e.g., the first message) in response to a detection of changes at the client device 70. In this regard, user defined settings may be utilized to define timer periods during which a communication session may be established, or limits to a number of communication sessions or synchronization operations which may be performed for a given period of time. The client device 70 may also be configured to receive an input defining whether to immediately request synchronization via the second synchronization method after declining to process the message (e.g., the first message) or whether to request synchronization at a later time. For example, a predetermined time may be set to provide a fixed delay prior to requesting synchronization. Alternatively, specific times may be set or other more complicated rules may be utilized to define when to request synchronization. In other words, the client synchronization element 94 may be configured for receiving a user input defining rules for determining when to perform the initiation of communication with the synchronization element.

It should also be noted that although emails were specifically used as an example of the data to be synchronized in describing operation of an embodiment of the present invention, embodiments of the present invention are not limited to application with email services. Embodiments of the present invention are also foreseen for use in connection with synchronizing calendar data, contacts data, synchronizing files, synchronizing databases, etc.

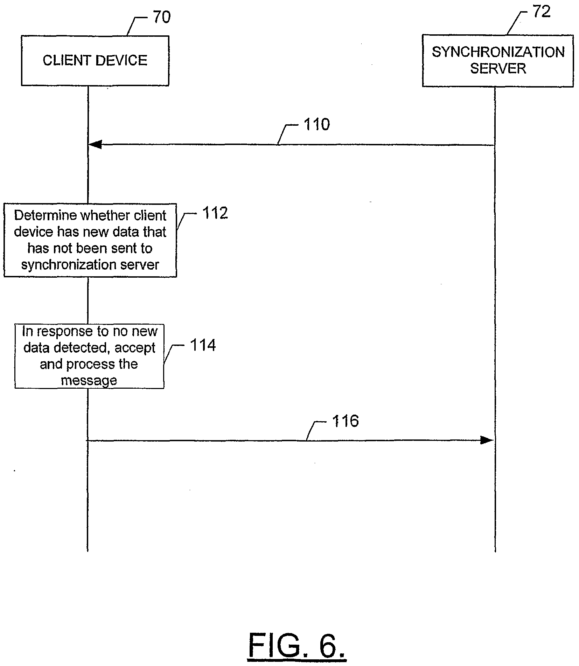

FIG. 6 is a control flow diagram illustrating a first synchronization method in accordance with exemplary embodiments of the present invention. In this regard, FIG. 6 illustrates a control flow diagram of message traffic according to a fast push synchronization method in accordance with an exemplary embodiment of the present invention. In an exemplary embodiment, the fast push synchronization method of FIG. 6 may be the first synchronization method although it should be understood that the first and second synchronization methods could each be any suitable synchronization method.

As shown in FIG. 6, a message 110 may be sent, for example, during an established communication session to the client device 70 (e.g., from the synchronization server 72) to inform the client device of the presence of data for synchronization. In an exemplary embodiment, the data for synchronization may be data that has not yet been communicated to the client device 70. This data may have been received at the synchronization server 72 (or another device) and is intended for the client device 70. In response to receipt of the message 110, the client device 70 may determine, at operation 112, whether the client device 70 has any new data or changes that have not been sent to the synchronization server 72. In response to the client device 70 having no changes or no new data, the client device 70 may accept and process the message 110 at operation 114. In this regard, the message 110, which may be called a fast push synchronization message (e.g., the first message), may comprise the data for synchronization. Accordingly, having received the data for synchronization and having no new data to provide to the synchronization server 72, the client device 70 may close communication with the synchronization server 72. In an exemplary embodiment, the client device 70 may communicate an acknowledgement message 116 to the synchronization server 72. The acknowledgement may not contain data. Accordingly, as shown in FIG. 6, if the client device 70 has or otherwise includes no new data, synchronization may be accomplished by the client device 70 merely accepting the message and making corresponding changes at the client device 70 without further communication of data content to the synchronization server 72.

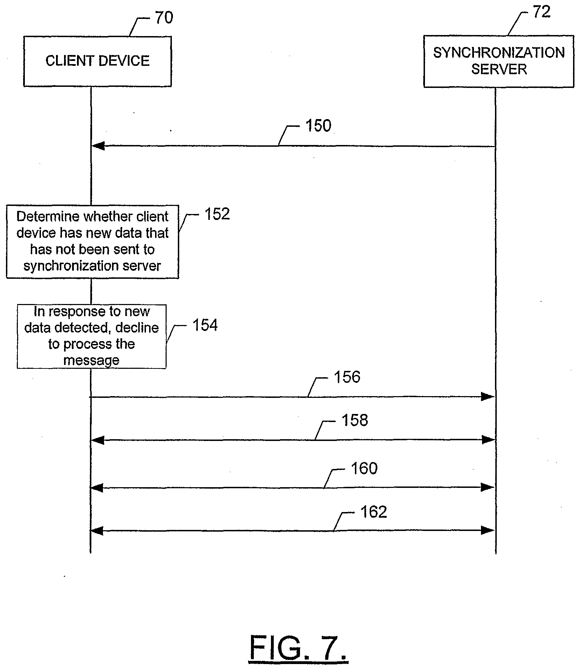

FIG. 7 is a control flow diagram illustrating a second synchronization method in accordance with exemplary embodiments of the present invention. It should be understood that although FIG. 7 illustrates one example of message traffic associated with the second synchronization method, other message traffic, and indeed any other synchronization method, may also be employed in accordance with embodiments of the present invention. Additionally, it should be noted that the messages exchanged in FIGS. 6 and 7 are merely examples of messages that may be exchanged and are in no way meant to limit embodiments of the present invention.

As shown in FIG. 7, a message 150 may be sent, for example, during an established communication session to the client device 70 (e.g., from the synchronization server 72). The message 150 may inform the client device 70 of the presence of data for synchronization (e.g., received at the synchronization server 72) and intended for the client device 70. In response to receipt of the message 150, the client device 70 may determine, at operation 152, whether the client device 70 has any new data or changes that have not been sent to the synchronization server 72. In response to the client device 70 having changes or new data, the client device 70 may decline to process the message 150 further at operation 154. Either immediately, or at a later time, as may be predefined by the user of the client device 70, the client device 70 may then communicate a synchronization request 156 to the synchronization server 72 to initiate synchronization of the data for synchronization. In response to receipt of the synchronization request 156, the synchronization server 72 and the client device 70 may exchange the new data and data for synchronization at 158. As such, data may be exchanged from the synchronization server 72 to the client device 70 and from the client device 70 to the synchronization server 72. Registration and/or authentication information may also be exchanged at 160. Log information and other information exchanges for closing the synchronization event may also be exchanged at 162. Accordingly, as shown in FIG. 7, if the client device 70 includes new data, synchronization may be initiated by the client device 70 via an exchange of a plurality of communication signals with the synchronization server 72.

Accordingly, as shown in FIGS. 6 and 7, at least two different synchronization methods may by discriminatorily provided based on whether the client device 70 includes new data with respect to the synchronization server 72. If no new data is detected at the client device 70 a fast push synchronization may be accomplished. However, if new data is detected, the client device 70 may initiate a synchronization event with the synchronization server 72 via a different synchronization method. The different types of synchronization methods may be predetermined, timing of user initiated synchronization may be selected by the user, and/or the user may define a type of connection between the client device 70 and the synchronization server 72. For example, the user may select a connection via LAN, GPRS, Dialup GSM, Wireless Aircard, etc. Thus, the user may further customize synchronization of the client device 70 thereby enhancing the user's experience in using the client device 70.

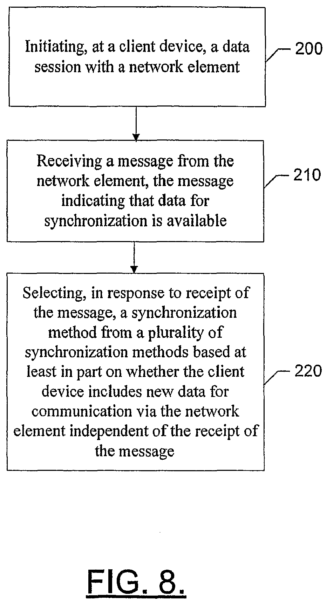

FIG. 8 is a flow diagram according to an exemplary method for providing intelligent synchronization according to an exemplary embodiment of the present invention. In this regard, one embodiment of a method of providing intelligent synchronization according to FIG. 8 may comprise an optional initial operation of initiating, at a client device, a data session with a network element (e.g., a synchronization element) at operation 200. At operation 210, a message may be received. In one exemplary embodiment, the message may be received from the network element. The message may indicate that data for synchronization is available (e.g., at the network element). In response to receipt of the message, a synchronization method may be selected from a plurality of synchronization methods based at least in part on whether the client device includes new data that has not been communicated to the network element at operation 220. In an exemplary embodiment, the synchronization method may be selected from among a first synchronization method or a second synchronization method. However, in alternative embodiments the synchronization method may be selected from among a plurality of synchronization methods.

As an alternative to the exemplary method described in reference to FIG. 8, another embodiment of a method of providing intelligent synchronization may comprise an optional initial operation of receiving at a network element, a message indicating data for synchronization is available. The message may be received from a client device. The message may indicate that data for synchronization is available at the client device. In response to receipt of the message, a synchronization method may be selected based at least in part on whether the network element includes new data that has not been communicated to the client device. In an exemplary embodiment, the synchronization method may be selected from among a plurality of synchronization methods. It should also be understood that the network element could comprise, for example, a synchronization server, and email server, a database, and/or the like.

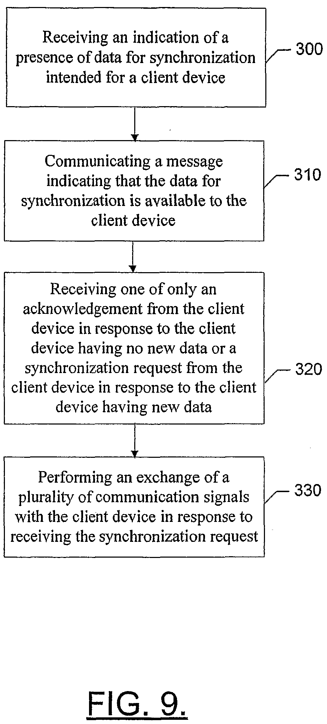

FIG. 9 is a flow diagram according to another exemplary method for providing intelligent synchronization according to an exemplary embodiment of the present invention. In this regard, one embodiment of a method of providing intelligent synchronization according to FIG. 9 may comprise receiving an indication of a presence of data for synchronization intended for a client device at operation 300. At operation 310, a message may be communicated indicating that the data for synchronization is available to the client device. The method may further include receiving one of only an acknowledgement from the client device in response to the client device having no new data or a synchronization request from the client device in response to the client device having new data at operation 320. In an exemplary embodiment, an optional operation 330 may comprise performing an exchange of a plurality of communication signals with the client device in response to receiving the synchronization request.

FIGS. 6, 7, 8 and 9 above are each representative of a flowchart of a system, method and program product according to exemplary embodiments of the invention. It will be understood that each block or step of the flowcharts, and combinations of blocks in the flowcharts, can be implemented by various means, such as hardware, firmware, and/or software comprising one or more computer program instructions. For example, one or more of the procedures described above may be embodied by computer program instructions. In this regard, the computer program instructions which embody the procedures described above may be stored by a memory device of an account management element and executed by a built-in processor in the account management element. As will be appreciated, any such computer program instructions may be loaded onto a computer or other programmable apparatus (i.e., hardware) to produce a machine, such that the instructions which execute on the computer or other programmable apparatus create means for implementing the functions specified in the flowcharts block(s) or step(s). These computer program instructions may also be stored in a computer-readable memory that can direct a computer or other programmable apparatus to function in a particular manner, such that the instructions stored in the computer-readable memory produce an article of manufacture comprising instruction means which implement the function specified in the flowcharts block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowcharts block(s) or step(s).

Accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, can be implemented by special purpose hardware-based computer systems which perform the specified functions or steps, or combinations of special purpose hardware and computer instructions.

The above described functions may be carried out in many ways. For example, any suitable means for carrying out each of the functions described above may be employed to carry out embodiments of the invention. In one embodiment, all or a portion of the elements of the invention generally operate under control of a computer program product. The computer program product for performing the methods of embodiments of the invention comprises a computer-readable storage medium, such as the non-volatile storage medium, and computer-readable program code portions, such as a series of computer instructions, embodied in the computer-readable storage medium.

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method comprising:
receiving, at a client device (70), a message indicating that data for synchronization is available via a particular synchronization method, the message including at least a portion of the data for synchronization;
determining whether the client device (70) includes new data that has not been communicated to a network element;
not accepting the message and selecting, at the client device (70), another synchronization method than the particular synchronization method that provides for an exchange of data between the client device (70) and the network element, wherein the time when to request synchronization via another synchronization method is defined by a user of the client device (70), if the client device (70) is determined to include new data; and
accepting the message and making corresponding changes at the client device (70) without further communication of data to the network element, if the client device (70)) is determined not to include new data that has not been communicated to the network element.

2. A method according to Claim 1, further comprising performing said another synchronization method with the network element in response to the client device (70) including the new data.

3. A method according to Claim 1, further comprising initiating communication with the network element for receipt of the new data via an exchange of a plurality of communication signals with the network element.

4. A method according to Claim 3, further comprising receiving a user input defining at least one rule for determining when to perform the initiation of communication with the network element.

5. A method according to Claim 1, wherein receiving the message comprises receiving one of a first message associated with the particular synchronization method or a second message associated with said another synchronization method.

6. A method according to Claim 5, further comprising one of selecting said another synchronization method in response to receipt of the second message, or selecting one of the particular synchronization method or said another synchronization method based on whether the client device (70) includes the new data in response to receipt of the first message.

7. A method according to Claim 1, further comprising prompting a user to select whether to initiate synchronization via said another synchronization method.

8. A computer program product, embodied in a computer-readable medium, comprising computer code for causing performance of a method according to any of claims 1 to 7, when the program is run on a computer.

9. An apparatus comprising computer code for causing performance of a method according to any of claims 1 to 7, when the code is executed on the apparatus.

10. An apparatus comprising a processor and a memory including computer program code, the memory and the computer program code configured to, with the processor, cause the apparatus at least to:
receive an indication of a presence of data for synchronization, via a particular synchronization method, intended for a client device (70);
communicate a message indicating that the data for synchronization is available to the client device (70);
receive an acknowledgement and acceptance of the message from the client device (70) in response to the client device (70) having no new data; and
receive a synchronization request from the client device (70) requesting synchronization via another synchronization method that provides for an exchange of data between the client device and the apparatus, wherein the time when to request synchronization via said another synchronization method is defined by a user of the client device (70), in response to the client device (70) having new data and not accepting the message.

11. A method comprising:
receiving an indication of a presence of data for synchronization intended for a client device (70);
communicating to a client device (70) a message indicating that the data for synchronization is available via a particular synchronization method;
receiving an acknowledgement and acceptance of the message from the client device (70) in response to the client device (70) having no new data; and
receiving a synchronization request from the client device (70) to request synchronization via another synchronization method that provides for an exchange of data between the client device and the apparatus, wherein the time when to request synchronization via said another synchronization method is defined by a user of the client device (70), in response to the client device (70) having new data and not accepting the message.

12. A method according to claim 11, further comprising performing an exchange of a plurality of communication signals with the client device (70) in response to receiving the synchronization request.

## Patentansprüche

1. Verfahren, umfassend:
an einer Clientvorrichtung (70) eine Nachricht zu empfangen, die anzeigt, dass Daten zur Synchronisation über ein bestimmtes Synchronisationsverfahren zur Verfügung stehen, wobei die Nachricht wenigstens einen Teil der Daten für die Synchronisation aufweist;
zu bestimmen, ob die Clientvorrichtung (70) neue Daten aufweist, die noch nicht an ein Netzelement übermittelt wurden;
die Nachricht nicht zu akzeptieren und an der Clientvorrichtung (70) ein anderes Synchronisationsverfahren als das betreffende Synchronisationsverfahren zu wählen, das einen Austausch von Daten zwischen der Clientvorrichtung (70) und dem Netzelement ermöglicht, wobei die Zeit, wann die Synchronisation über ein anderes Synchronisationsverfahren anzufordern ist, von einem Benutzer der Clientvorrichtung (70) definiert wird, falls bestimmt wird, dass die Clientvorrichtung (70) neue Daten aufweist; und
die Nachricht zu akzeptieren und entsprechende Änderungen an der Clientvorrichtung (70) vorzunehmen ohne weitere Übermittlung von Daten an das Netzelement, falls bestimmt wird, dass die Clientvorrichtung (70) keine neuen Daten aufweist, die noch nicht an das Netzelement übermittelt wurden.

2. Verfahren gemäß Anspruch 1, ferner umfassend, das andere Synchronisationsverfahren mit dem Netzelement in Reaktion darauf auszuführen, dass die Clientvorrichtung (70) neue Daten enthält.

3. Verfahren gemäß Anspruch 1, ferner umfassend, eine Kommunikation mit dem Netzelement zu veranlassen für den Empfang der neuen Daten über einen Austausch mehrerer Kommunikationssignale mit dem Netzelement.

4. Verfahren gemäß Anspruch 3, ferner umfassend, eine Benutzereingabe zu empfangen, die wenigstens eine Regel zum Bestimmen umfasst, wann das Veranlassen der Kommunikation mit dem Netzelement erfolgen soll.

5. Verfahren gemäß Anspruch 1, wobei das Empfangen der Nachricht umfasst, eine von einer ersten Nachricht, die dem betreffenden Synchronisationsverfahren zugeordnet ist, oder einer zweiten Nachricht, die dem anderen Synchronisationsverfahren zugeordnet ist, zu empfangen.

6. Verfahren gemäß Anspruch 5, ferner umfassend eines von Auswählen des anderen Synchronisationsverfahrens in Reaktion auf den Empfang der zweiten Nachricht oder Auswählen des bestimmten Synchronisationsverfahrens oder des anderen Synchronisationsverfahrens basierend darauf, ob die Clientvorrichtung (70) neue Daten enthält, in Reaktion auf den Empfang der ersten Nachricht.

7. Verfahren gemäß Anspruch 1, ferner umfassend, einen Benutzer aufzufordern auszuwählen, ob die Synchronisation über das andere Synchronisationsverfahren veranlasst werden soll.

8. Computerprogrammprodukt, ausgeführt in einem computerlesbaren Datenträger, umfassend Computercode, um die Ausführung eines Verfahrens gemäß einem der Ansprüche 1 bis 7 zu veranlassen, wenn das Programm auf einem Computer ausgeführt wird.

9. Vorrichtung, die Computercode umfasst, um die Ausführung eines Verfahrens gemäß einem der Ansprüche 1 bis 7 zu veranlassen, wenn der Code auf der Vorrichtung ausgeführt wird.

10. Vorrichtung, die einen Prozessor und einen Speicher mit Computerprogrammcode umfasst, wobei der Speicher und der Computerprogrammcode dafür ausgelegt sind, mit dem Prozessor die Vorrichtung zumindest dazu zu veranlassen:
eine Anzeige des Vorliegens von Daten für eine Synchronisation über ein bestimmtes Synchronisationsverfahren, die für eine Clientvorrichtung (70) vorgesehen sind, zu empfangen;
eine Nachricht, die anzeigt, dass die Daten für die Synchronisation zur Verfügung stehen, an die Clientvorrichtung (70) zu übermitteln;
eine Quittung und Annahme der Nachricht von der Clientvorrichtung (70) zu empfangen, in Reaktion darauf, dass die Clientvorrichtung (70) keine neuen Daten aufweist; und
eine Synchronisationsanforderung von der Clientvorrichtung (70) zu empfangen, die die Synchronisation über ein anderes Synchronisationsverfahren anfordert, das einen Austausch von Daten zwischen der Clientvorrichtung und der Vorrichtung ermöglicht, wobei die Zeit, wann die Synchronisation über das andere Synchronisationsverfahren anzufordern ist, von einem Benutzer der Clientvorrichtung (70) definiert wird, in Reaktion darauf, dass die Clientvorrichtung (70) keine neuen Daten aufweist und die Nachricht nicht akzeptiert wird.

11. Verfahren, umfassend:
eine Anzeige des Vorliegens von Daten für eine Synchronisation, die für eine Clientvorrichtung (70) vorgesehen sind, zu empfangen;
an eine Clientvorrichtung (70) eine Nachricht zu übermitteln, die anzeigt, dass die Daten zur Synchronisation über ein bestimmtes Synchronisationsverfahren zur Verfügung stehen;
eine Quittung und Annahme der Nachricht von der Clientvorrichtung (70) zu empfangen, in Reaktion darauf, dass die Clientvorrichtung (70) keine neuen Daten aufweist; und
eine Synchronisationsanforderung von der Clientvorrichtung (70) zu empfangen, um die Synchronisation über ein anderes Synchronisationsverfahren anzufordern, das einen Austausch von Daten zwischen der Clientvorrichtung und der Vorrichtung ermöglicht, wobei die Zeit, wann die Synchronisation über das andere Synchronisationsverfahren anzufordern ist, von einem Benutzer der Clientvorrichtung (70) definiert wird, in Reaktion darauf, dass die Clientvorrichtung (70) neue Daten aufweist und die Nachricht nicht akzeptiert wird.

12. Verfahren gemäß Anspruch 11, ferner umfassend, einen Austausch mehrerer Kommunikationssignal mit der Clientvorrichtung (70) auszuführen, in Reaktion auf das Empfangen der Synchronisationsanforderung.

## Revendications

1. Procédé comprenant :
la réception, au niveau d'un dispositif client (70), d'un message indiquant que des données à synchroniser sont disponibles par l'intermédiaire d'un procédé de synchronisation particulier, le message comportant au moins une partie des données à synchroniser ;
la détermination que le dispositif client (70) comporte ou non de nouvelles données qui n'ont pas été communiquées à un élément réseau ;
la non-acceptation du message et la sélection, au niveau du dispositif client (70), d'un procédé de synchronisation autre que le procédé de synchronisation particulier qui permet un échange de données entre le dispositif client (70) et l'élément réseau, dans lequel le moment auquel requérir la synchronisation par l'intermédiaire d'un autre procédé de synchronisation est défini par un utilisateur du dispositif client (70), s'il est déterminé que le dispositif client (70) comporte de nouvelles données ; et
l'acceptation du message et l'exécution des changements correspondants au niveau du dispositif client (70) sans autre communication de données à l'élément réseau, s'il est déterminé que le dispositif client (70) ne comporte pas de nouvelles données qui n'ont pas été communiquées à l'élément réseau.

2. Procédé selon la revendication 1, comprenant en outre l'exécution dudit autre procédé de synchronisation avec l'élément réseau en réponse au fait que le dispositif client (70) comporte de nouvelles données.

3. Procédé selon la revendication 1, comprenant en outre le lancement d'une communication avec l'élément réseau pour la réception des nouvelles données par un échange d'une pluralité de signaux de communication avec l'élément réseau.

4. Procédé selon la revendication 3, comprenant en outre la réception d'une entrée utilisateur définissant au moins une règle de détermination du moment auquel il convient d'effectuer le lancement de la communication avec l'élément réseau.

5. Procédé selon la revendication 1, dans lequel la réception du message comprend la réception de l'un d'un premier message associé au procédé de synchronisation particulier ou d'un second message associé audit autre procédé de synchronisation.

6. Procédé selon la revendication 5, comprenant en outre l'une de la sélection dudit autre procédé de synchronisation en réponse à la réception du second message, ou de la sélection de l'un du procédé de synchronisation particulier ou dudit autre procédé de synchronisation selon que le dispositif client (70) comporte ou non les nouvelles données en réponse à la réception du premier message.

7. Procédé selon la revendication 1, comprenant en outre l'invite d'un utilisateur à sélectionner de lancer ou non la synchronisation par l'intermédiaire dudit autre procédé de synchronisation.

8. Produit de programme informatique, mis en oeuvre dans un support lisible par ordinateur, comprenant un code informatique pour entraîner l'exécution d'un procédé selon l'une quelconque des revendications 1 à 7, quand le procédé est exécuté sur un ordinateur.

9. Appareil comprenant un code informatique pour entraîner l'exécution d'un procédé selon l'une quelconque des revendications 1 à 7, quand le code est exécuté sur l'appareil.

10. Appareil comprenant un processeur et une mémoire comportant un code de programme informatique, la mémoire et le code de programme informatique étant configurés pour, avec le processeur, amener l'appareil à au moins :
recevoir une indication d'une présence de données à synchroniser, par l'intermédiaire d'un procédé de synchronisation particulier, destinées à un dispositif client (70) ;
communiquer au dispositif client (70) un message indiquant que les données à synchroniser sont disponibles ;
recevoir un acquittement et une acceptation du message de la part du dispositif client (70) en réponse au fait que le dispositif client (70) n'a pas de nouvelles données ;
recevoir une requête de synchronisation de la part du dispositif client (70) qui requiert une synchronisation par l'intermédiaire d'un autre procédé de synchronisation qui permet un échange de données entre le dispositif client et l'appareil, dans lequel le moment auquel requérir la synchronisation par l'intermédiaire dudit autre procédé de synchronisation est défini par un utilisateur du dispositif client (70), en réponse au fait que le dispositif client (70) n'a pas de nouvelles données et n'accepte pas le message.

11. Procédé comprenant :
la réception d'une indication d'une présence de données à synchroniser destinées à un dispositif client (70) ;
la communication à un dispositif client (70) d'un message indiquant que les données à synchroniser sont disponibles par l'intermédiaire d'un procédé de synchronisation particulier ;
la réception d'un acquittement et d'une acceptation du message de la part du dispositif client (70) en réponse au fait que le dispositif client (70) n'a pas de nouvelles données ;
la réception d'une requête de synchronisation de la part du dispositif client (70) pour requérir une synchronisation par l'intermédiaire d'un autre procédé de synchronisation qui permet un échange de données entre le dispositif client et l'appareil, dans lequel le moment auquel requérir la synchronisation par l'intermédiaire dudit autre procédé de synchronisation est défini par un utilisateur du dispositif client (70), en réponse au fait que le dispositif client (70) n'a pas de nouvelles données et n'accepte pas le message.

12. Procédé selon la revendication 11, comprenant en outre l'exécution d'un échange d'une pluralité de signaux de communication avec le dispositif client (70) en réponse à la réception de la requête de synchronisation.
